# EUROPEAN PATENT SPECIFICATION

(11) **EP 2 455 164 B1**
(45) Date of publication and mention of the grant of the patent: **25.12.2013**
(21) Application number: 11171141.2
(22) Date of filing: 23.06.2011
(51) Int. Cl.: B05B 7/16, H01C 7/02, H05B 3/14, H05B 3/38, F16L 53/00

(54) **A spray painting device with a heating system of the carrier fluid**
Spritzlackiervorrichtung mit System zum Erwärmen der Trägerflüssigkeit
Dispositif de peinture par pulvérisation avec un système de chauffage de fluide transporteur

(30) Priority: 18.11.2010 IT FI20100059 U
(43) Date of publication of application: 23.05.2012
(73) Proprietor: Grohova, Marcela, 50031 Barberino di Mugello (FI) (IT)
(72) Inventor: Grohova, Marcela, 50031 Barberino di Mugello (FI) (IT)
(74) Representative: Soldatini, Andrea

(56) References cited:
- WO-A2-2006/016256
- WO-A2-2006/056864
- DE-U1-202010 004 790
- US-A- 4 330 703
- TEMAR S.R.L:: "Cavi Autoregolanti", , 8 June 2007 (2007-06-08), pages 1-2, XP55020570, Retrieved from the Internet: URL:http://www.temarsrl.it/download/sez. A - industriale/A2 - cavi Autoregolanti.pdf [retrieved on 2012-02-29]

## Description

The present invention concerns the field of the spray painting systems, and more specifically a spray painting device providing for a heating of the carrier fluid.

Devices of this type are generally known and comprise a production unit of a carrier fluid, e.g. Compressed air, a flexible duct for conveying the fluid, a delivery gun at the end of the duct, the gun also receiving a paint feed, and finally heating means for heating the carrier fluid, associated to the production unit or also to the duct.

The heating of the carrier fluid brings about well known advantages in terms of quality of the painting, but only if a satisfactory control of the temperature of the carrier fluid can be ensured when the same is mixed with the paint. To this purpose, known systems such as the one disclosed in WO2006016256, propose the use of real thermoregulation means, in practice power adjustment means that adjust the electric feed of resistance heating elements.

This kind of regulation carried out by an operator is however a source of problems, considering that the same operator must take care to act readily in order to adapt the working conditions in response to variations of external factors such as the temperature of the fluid at the inlet, the ambient temperature, the length of the duct, the pressure and flow rate of the fluid. In this connection, the known systems result insufficiently practical and cause instability that can affect, even remarkably, the effectiveness and quality of the painting. The possibility of using a temperature sensor in correspondence with the delivery nozzle of the gun, for obtaining a control signal directed to the power adjustment means, also disclosed in the prior art, is unsatisfactory in that it involves structural complications, additional bulk and a delay in the adjustment response.

The object of the present invention is to provide a spray painting device with a heating system for the carrier fluid, that permits to ensure stable operating conditions in connection with precise temperature requirements at the delivery, without requiring adjustment interventions and without bringing about significant structural complications.

According to the invention, this and other objects are achieved with a delivery duct for a spray painting device having the essential features of annexed claim 1.

The features and advantages of the spray painting device according to the invention will become apparent from the following description of embodiments thereof, made by way of example and not limitative with reference to the attached drawings in which:

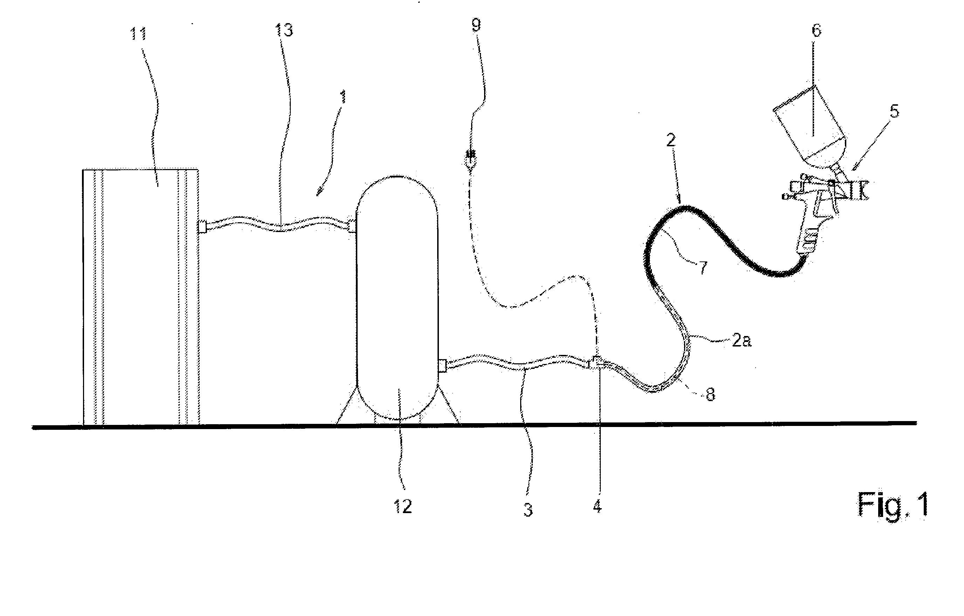

- figure 1 is a schematic representation of a spray painting device including a delivery duct outside the scope of the present invention;
- figure 2 shows, taken alone and in greater detail, though again schematically, the delivery duct of figure 1, without a delivery gun;
- figure 3 represents, still schematically, a portion of the duct broken so as to make its inner configuration clear; and
- figure 4 represents as in figure 2 a duct according to the invention.

Referring to figures from 1 to 3, a device according to the invention conventionally comprises a carrier fluid production unit 1 comprising e.g. and typically compression means 11 (the fluid being simple air or other gaseous fluid suitable to the purpose), and a fluid accumulation tank 12 communicated with the unit 11 thanks to a line 13.

A delivery duct 2 is arranged downstream of the tank 12 and can be connected to the same directly or, as in the depicted example, via a rigid or flexible hose fitting 3. The duct 2 comprises in any case at least a segment of flexible pipe 2a, made of a suitable material chosen among those already in use in the field. A sleeve 4 for connecting the pipe length 2a to the fitting 3 (or directly to the tank 12) is provided at an end of the length, whereas the other, opposite end supports a delivery gun 5 associated with a paint feed 6.

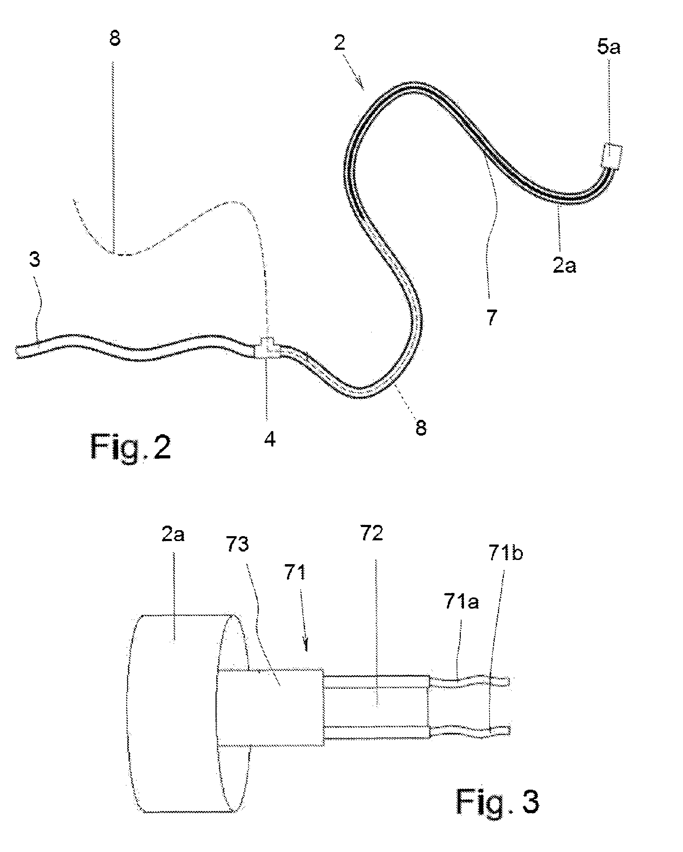

The gun 5, in which the paint is atomized by the carrier fluid, is as such of a known type outside the scope of the present invention. Therefore, there will be omitted a representation and a detailed of the gun, and analogously of the sleeve 4. In figure 3 the gun is not represented and only a fitting element 5a thereof is shown at the end of the pipe length 2a.

Going in further detail as far as the pipe length 2a is concerned, there extends along at least a portion of the developments thereof, preferably ma not necessarily starting from the end with the gun, a semiconductor self-regulating heating cable 7, arranged inside the pipe so as to take on a (minimal) part of the carrier fluid flow section, resulting in a thermal exchange relationship with the fluid.

The self-regulating heating cable has in practice a core 71 made up of a couple of conductors 71a, 71b, supplied with a determined voltage at an end of the cable, and electrically isolated at the other end. Among the conductors a semiconductor matrix 72 is arranged, for instance an extruded polymer mixture with a dispersion of a graphite powder. The above components can be wrapped by a sheath 73 made of a thermoplastic material and a metal coat. The matrix, when the cable is manufactured, is treated with a radiation so as to gain an operative behavior which can be defined as equal to that of a set of micro-resistances arranged in parallel between the conductors; however such resistances are such that, as the temperature of the cable varies, they react with an inverse variation of their own thermal dissipation power.

Cables of this type are known as such and used for example for antifreeze applications in hydraulic distribution facilities (see for purely indicative purposes - among the various examples available - the products marketed by the company Temar S.r.l. - www.temarsrl.it). These cables have then the property of autonomously regulating their heat emission as a function of a working temperature to which they are set. In practice, such a type of cable is designed to "work" always at a substantially stable temperature, if the voltage supply remains unchanged.

The voltage supply to the heating cable 8 is provided at the end of the cable closer to the sleeve 4, that is farther from the gun 5. In fact a supply wire 8 extends from said closer end and becomes accessible at the sleeve 4, to which then, thanks to a common plug/socket device 9, the desired voltage can be supplied, through a connection with the electric mains.

Therefore, once a cable of specific intrinsic properties (width and then heating surface) has been chosen, and once selected a length of the cable in relationship with the length of the duct 2, all the above after considering the specific operational needs, a delivery duct is obtained that, without requiring any external adjustment intervention during the use, heats the carried fluid so as to keep it at a "constant" temperature, to be obviously intended as keeping said temperature within a range that does not exceed a few Celsius degrees.

One has then the possibility of ensuring all the advantages involved by a heated carrier fluid making the painting conditions stable, without the possible problems deriving from the adjustment carried out by an operator, and without the bulk, the constructional complications and the delays in response of the solutions making use of a thermostat. Obviously, various ducts with different heating properties can be made available to the operator, so that the same can change and replace the duct, choosing the most appropriate on the basis of the specific needs.

The duct can have any length, with no specific upper limit, on condition that one consequently adapts the length of the heating cable. Different ducts can be made available each for a determined temperature range (20°-25° C, 30°-35° C etc. up to 100°C), to be chosen on the basis of the ideal temperature for the paint substance in use, or of other critical factors of the specific work to be carried out.

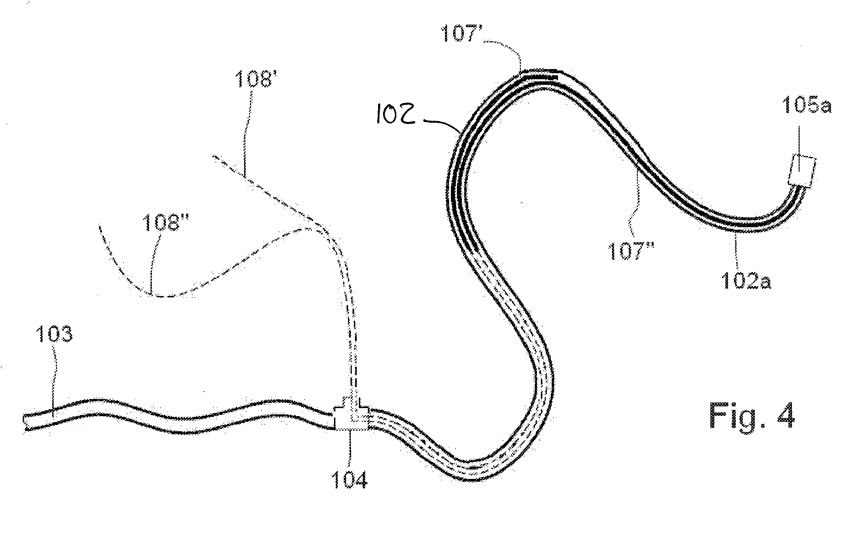

According to the main aspect of the present invention, and making now specific reference to figure 4, wherein same or corresponding components to those of the first embodiment are indicated with corresponding reference numerals, in a duct 102 two (or more) different self-regulating heating cables 107', 107" can be arranged, each having predetermined properties in order to obtain a certain temperature. The cables can be activated selectively, that is, one can choose to activate only either of the two cables, or both.

In practice, in case of two cables, if one of the two is chosen so as to obtain, when activated alone, a stable temperature of about 30°, and the other so as to offer, again when activated singularly, a stable temperature of about 60°, when both cables are activated a combined action will result, producing a heating to about 75°. Accordingly, there will be the possibility to select, with a single duct, the most appropriate among at least three different temperatures available, depending on the specific working requirements. Analogously, by way of a further example, a duct can be made available with a cable for a temperature of 30°, a cable for a temperature of 40°, and a combined heating, obtainable by activating both cables, to about 50°.

In order to achieve this, besides to a common control switch arranged on the cable voltage supply wires 108', 108", various different constructions can be provided, and namely: - use two (or more) cables of the same type but different lengths, right like in the example of figure 4; - use two (or more) cables of the same length but different types, that is different intrinsic heating power; - two (or more) identical cables as to length and type; - two (or more) different cables both in length and type.

To summarize, the solution proposed by the present invention is safe (complying with the so-called ATEX European Directive), reliable and effective, always keeping the temperature at the desire value and without being affected by external factors, structurally simple and easy to handle (the provision of the cable does not oblige to increase the width of the duct, and does not causes the same duct to become heavier).

The duct can be used with a device different than that taken above as an indicative reference, and with different types of carrier fluids. The device making use of the duct can be very quickly brought to the stable and full performance conditions, thanks to the ready response of the two or more self-regulating heating cables. Moreover, the devices has a reduced consumption, surely competitive with respect to the known devices. No health risks can affect the operators, even when the connection to the electric mains is not removed during the pauses or at the end of the painting operations.

The invention is not limited to the embodiments above describes and shown, but encompasses other variant embodiments within the scope of the appended claims.

## Claims

1. A delivery duct (102) for a spray painting device, said duct (102) comprising:
at least one flexible pipe length (102a); at an end of said flexible pipe length (2a, 102a),
connection means to a production unit of a carrier fluid; and at the opposite end of the flexible pipe length (102a), a delivery gun adapted to receive a painting substance feed, the delivery duct (102) further comprising carrier fluid heating means arranged at least along a portion of said flexible pipe length (102a), **characterised in that** said heating means comprise two or
more semiconductor self-regulating heating resistance cables (107', 107"), adapted to keep a constant temperature when supplied with a constant voltage input, said cables (107', 107") extending along at least a portion of said flexible pipe length (102a), to be activated in a selective fashion to set the heating of the carrier fluid to different temperatures.

2. The delivery duct (102) according to claim 1, wherein from the end of each cable (107', 107") opposite said gun extends a power supply wire (108', 108") accessible on a sleeve (104) for plugging with electric voltage supply means, said sleeve ( 104) being also adapted for connecting said flexible pipe length (102a) to said carrier fluid production unit.

3. The delivery duct (102) according to claim 1 or 2, wherein said at least Two or more cables (107' 107") are arranged within said flexible pipe length (102a) so as to take up a part of the carrier fluid flow section, being in a thermal exchange relationship with the fluid.

4. The delivery duct (102) according to any of the previous claims, wherein said two or more cables (107', 107") have a core made up of a couple of conductors (71a, 71b) adapted to be supplied at an end with a determined voltage, and electrically isolated at the opposite end, a semiconductor matrix (72) being arranged between said conductors (71a, 71b), said matrix (72) being adapted to operatively behave as micro-resistances arranged in parallel among the conductors (71a, 71b), said resistances reacting to a variation in temperature of the cables (107', 107") with a predetermined inverse variation of their own dissipating power.

5. The delivery duct (102) according to any of the previous claims, wherein the two self-regulating heating cables (107', 107") can be activated in a selective fashion, thereby three different temperatures of the carrier fluid can be obtained by selectively activating either or both cables.

6. The delivery duct (102) according to any of the previous claims, wherein said two or more cables (107', 107") are of the same type, that is intrinsic heating power, but different lengths, or they are of the same length but different type, or equal as to length and type, or still again different both in length and type.

7. The delivery duct (102) according to any of the previous claims, comprising or adapted to be associated with control means for selectively controlling the voltage supplied to said two or more self-regulating heating cables (107', 107").

8. A spray painting device comprising a carrier fluid production unit (1) and a delivery duct (102), **characterized in that** said delivery duct (102) is a duct according to any of the previous claims.

9. The spray painting device according to claim 8, comprising a kit of a plurality of delivery ducts (102) of different heating properties, mutually replaceable and interchangeable.

10. The spray painting device according to claim 8 or 9, wherein said carrier fluid production unit (1) comprises compression means (11) and a compressed fluid accumulation tank (12).

## Patentansprüche

1. Zufuhrleitung (102) für eine Spritzlackiervorrichtung, wobei die Leitung (102) enthält:
wenigstens eine flexible Rohrlänge (102a); Verbindungseinrichtungen zu einer Produktionseinheit eines Trägerfluids an einem Ende der flexiblen Rohrlänge (2a, 102a); und eine Zufuhrpistole, die ausgelegt ist, um eine zugeführte Malsubstanz zu empfangen, an dem entgegengesetzten Ende der flexiblen Rohrlänge (102a), wobei die Zufuhrleitung (102) ferner Trägerfluid-Erwärmungseinrichtungen enthält, die zumindest längs eines Teils der flexiblen Rohrlänge (102a) angeordnet sind, **dadurch gekennzeichnet, dass** die Erwärmungseinrichtungen zwei oder mehr selbstregulierende Halbleiter-Widerstandserwärmungskabel (107', 107") enthalten,
die ausgelegt sind, um eine konstante Temperatur zu halten,
wenn sie mit einer konstanten Eingangsspannung versorgt werden, wobei sich die Kabel (107', 107") längs zumindest eines Teils der flexiblen Rohrlänge (102a) erstrecken, um in einer selektiven Weise aktiviert zu werden, um das Erwärmen des Trägerfluids auf verschiedene Temperaturen einzustellen.

2. Zufuhrleitung (102) nach Anspruch 1, wobei sich vom zur Pistole entgegengesetzten Ende jedes Kabels (107', 107") ein Leitungsversorgungsdraht (108', 108") erstreckt, der an einer Hülse (104) zum Zusammenstecken mit elektrischen Spannungsversorgungseinrichtungen zugänglich ist, wobei die Hülse (104) auch zum Verbinden der flexiblen Rohrlänge (102a) mit der Trägerfluid-Produktionseinheit ausgelegt ist.

3. Zufuhrleitung (102) nach Anspruch 1 oder 2, wobei die wenigstens zwei oder mehr Kabel (107', 107") innerhalb der der flexiblen Rohrlänge (102a) angeordnet sind, um einen Teil der Trägerfluid-Strömungssektion aufzunehmen, die in einer thermischen Austauschbeziehung mit dem Fluid ist.

4. Zufuhrleitung (102) nach einem der vorhergehenden Ansprüche, wobei die zwei oder mehr Kabel (107', 107") einen Kern haben, der aus einem Paar von Leitern (71a, 71b) besteht, die ausgelegt sind, um an einem Ende mit einer vorbestimmten Spannung versorgt zu werden, und am entgegengesetzten Ende elektrisch isoliert sind, wobei eine Halbleitermatrix (72) zwischen den Leitern (71a, 71b) angeordnet ist, wobei die Matrix (72) ausgelegt ist, um sich operativ als Mikrowiderstände zu verhalten, die zwischen den Leitern (71a, 71b) parallel angeordnet sind, wobei die Widerstände auf eine Variation bei der Temperatur der Kabel (107', 107") mit einer vorbestimmten inversen Variation ihrer eigenen Verlustleistung reagieren.

5. Zufuhrleitung (102) nach einem der vorhergehenden Ansprüche, wobei die zwei selbstregulierenden Erwärmungskabel (107', 107") in einer selektiven Weise aktiviert werden können, wodurch durch selektives Aktivieren von einem der oder beiden Kabel(n) drei verschiedene Temperaturen des Trägerfluids erhalten werden können.

6. Zufuhrleitung (102) nach einem der vorhergehenden Ansprüche, wobei die zwei oder mehr Kabel (107', 107") vom selben Typ, nämlich der intrinsischen Erwärmungsleistung, aber von unterschiedlichen Längen sind, oder sie von derselben Länge, aber unterschiedlichen Typen sind, oder hinsichtlich Länge und Typ gleich sind, oder weiter wiederum unterschiedlich sowohl in der Länge als auch im Typ sind.

7. Zufuhrleitung (102) nach einem der vorhergehenden Ansprüche, enthaltend oder ausgelegt, um mit Steuereinrichtungen zum selektiven Steuern der Spannung verbunden zu sein, die zu den zwei oder mehr selbstregulierenden Erwärmungskabel (107', 107") zugeführt wird.

8. Spritzlackiervorrichtung, enthaltend eine Trägerfluid-Produktionseinheit (1) und eine Zufuhrleitung (102), **dadurch gekennzeichnet, dass** die Zufuhrleitung (102) eine Leitung nach einem der vorhergehenden Ansprüche ist.

9. Spritzlackiervorrichtung nach Anspruch 8, enthaltend ein Kit mit einer Mehrzahl von Zufuhrleitungen (102) von unterschiedlichen Erwärmungseigenschaften , die gegenseitig ersetzbar und austauschbar sind.

10. Spritzlackiervorrichtung nach Anspruch 8 oder 9, wobei die Trägerfluid-Produktionseinheit (1) Kompressionseinrichtungen (11) und einem Komprimierungsfluid-Sammeltank (12) enthält.

## Revendications

1. Un conduit de distribution (102) pour un dispositif pour peinture par pulvérisation, ledit conduit (102) comprenant : au moins une longueur de tuyau flexible (102a); à une extrémité de ladite longueur de tuyau flexible (2a, 102a) des moyens de connexion à une unité de production d'un fluide porteur ; et à l'extrémité opposée de ladite longueur de tuyau flexible (1 02a) un pistolet adapté pour être alimenté en peinture, le conduit d'alimentation (102) comprenant en outre des moyens de chauffage du fluide porteur agencés au moins le long d'une portion de ladite longueur de tuyau flexible (102a), **caractérisé en ce que** lesdits moyens de chauffage comportent au moins deux câbles à résistance chauffante autorégulatrice à semi-conducteur (107', 107"), adaptés pour garder une température constante quand ils sont alimentés sous une tension constante, lesdits câbles (107', 107") s'étendant le long au moins d'une portion de ladite longueur de tuyau flexible (102a), pour être activés d'une façon sélective pour amener la chaleur du fluide porteur à différentes températures.

2. Le conduit de distribution (102) selon la revendication 1, où, à partir de l'extrémité de chaque câble (107', 107") opposée au dit pistolet, s'étend un fil d'alimentation en énergie (108', 108") accessible sur une prise (104) pour être connecté à des moyens d'alimentation en tension électrique, ladite prise (104) étant également adaptée pour relier ladite longueur de tuyau flexible (102a) à ladite unité de production de fluide porteur.

3. Le conduit de distribution (102) selon l'une des revendications 1 et 2, où lesdits au moins deux câbles (107', 107") sont disposés à l'intérieur de ladite longueur de tuyau flexible (102a) de façon à occuper une portion de la section de passage du fluide porteur, en étant dans une relation d'échange thermique avec le fluide.

4. Le conduit de distribution (102) selon l'une quelconque des revendications précédentes, où lesdits au moins deux câbles (107', 107") ont un noyau composé d'une paire de conducteurs (71 a, 71 b) adaptés pour être alimentés à une extrémité sous une tension déterminée, et électriquement isolés à l'extrémité opposée, une matrice à semi-conducteur (72) étant agencée entre lesdits conducteurs (71 a, 71 b), ladite matrice (72) étant adaptée pour se comporter comme des micro-résistances montées en parallèle sur les conducteurs (71 a, 71 b), lesdites résistances réagissant à une variation de la température des câbles (107', 107") avec une variation inverse prédéterminée de leur propre puissance de dissipation.

5. Le conduit de distribution (102) selon l'une quelconque des revendications précédentes, où les deux câbles de chauffage autorégulant (107', 107") peuvent être activés d'une façon sélective, si bien que trois températures différentes du fluide porteur peuvent être obtenues en activant sélectivement l'un ou l'autre des câbles, ou les deux.

6. Le conduit de distribution (102) selon l'une quelconque des revendications précédentes, où lesdits au moins deux câbles (107', 107") sont de même type, c'est-à-dire d'une puissance de chauffage intrinsèque, mais de différente longueur, ou ils sont de même longueur mais de type différent, ou de même longueur et de même type, ou même encore de différente longueur et de type différent.

7. Le conduit de distribution (102) selon l'une quelconque des revendications précédentes, comportant des moyens de commande pour commander sélectivement la tension fournie aux au moins dits deux câbles chauffants autorégulant (107', 107") ou étant adapté pour être associé à ces moyens.

8. Un dispositif pour peinture par pulvérisation comportant une unité de production de fluide porteur (1) et un conduit de distribution (102), **caractérisé en ce que** ledit conduit de distribution est un conduit (102) selon l'une quelconque des revendications précédentes.

9. Le dispositif pour peinture par pulvérisation selon la revendication 8, comportant un kit d'une pluralité de conduits de distribution (102) de différentes propriétés de chauffage, mutuellement remplaçables et interchangeables.

10. Le dispositif pour peinture par pulvérisation selon l'une des revendications 8 et 9, où ladite l'unité de production de fluide porteur (1) comporte des moyens de compression (11) et un réservoir de stockage de fluide comprimé (12).
